Europäisches Patentamt

European Patent Office

Office européen des brevets

(11) Veröffentlichungsnummer: **0 199 711**
A1

(12) **EUROPÄISCHE PATENTANMELDUNG**

(21) Anmeldenummer: 86890100.0

(22) Anmeldetag: 10.04.86

(51) Int. Cl.⁴: **B22D 23/00** , B22D 15/04 , C03B 5/20 , C03B 5/14 , F27B 3/06

(30) Priorität: 22.04.85 AT 1193/85

(43) Veröffentlichungstag der Anmeldung:
29.10.86 Patentblatt 86/44

(84) Benannte Vertragsstaaten:
BE CH DE FR GB IT LI LU NL SE

(71) Anmelder:
Leichtmetallguss-Kokillenbau-Werk
Illichmann Aktiengesellschaft
Keisslergasse 26
A-1140 Wien(AT)

(72) Erfinder: Illichmann, Josef Valentin
Keisslergasse 26-28
A-1140 Wien(AT)

(74) Vertreter: Köhler-Pavlik, Johann, Dipl.-Ing.
Margaretenplatz 5
A-1050 Wien(AT)

(54) Kippofen zur Herstellung von Kokillengussteilen aus Glas, Metall, insbesondere Leichtmetall.

(57) Ein Kippofen zur Herstellung von Kokillengußteilen aus Glas, Metall, insbesondere Leichtmetall, ist von der Grundstellung aus um zumindest eine Tragachse (3,3') in zumindest zwei Gießstellungen kippbar. Gegebenenfalls ist vor der Ausgießöffnung (11) der Ofenauskleidung (12) eine Einrichtung zum Zurückhalten der Schlacke in Form einer Abstreifleiste (18) vorgesehen, die um eine zur jeweiligen Tragachse (3,3') parallele Drehachse - schwenkbar ist.

EP 0 199 711 A1

Fig. 1

0 199 711

1a

Kippofen zur Herstellung von Kokillengußteilen aus Glas, Metall, insbesondere Leichtmetall

Die Erfindung betrifft einen Kippofen zur Herstellung von Kokillengußteilen aus Glas, Metall, insbesondere Leichtmetall, gegebenenfalls mit Einrichtungen zum Zurückhalten der Schlacke vor der Ausgießöffnung der Ofenauskleidung des Gießgefäßes, wobei der Kippofen von einer Grundstellung um eine Tragachse in eine Gießstellung und auf der anderen Seite in eine zweite Stellung kippbar ist.

Durch die DE-AS 12 01 954 ist ein Gießgefäß bekannt, welches von einer Grundstellung aus in eine Gießstellung und in eine sogenannte Abschlackstellung gebracht werden kann.

In der DE-PS 12 18 122 wird ein Kippofen mit einer Einrichtung zum Zurückhalten der Schlacke beschrieben, welcher aus der Grundstellung um eine Drehachse in eine Gießstellung kippbar ist, d.h., es kann nur immer eine Kokille abgegossen werden. Um den Ausstoß zu verdoppeln, müßte ein zweiter Kippofen bereitgestellt werden.

Um diesen Nachteil zu beseitigen, wird erfindungsgemäß vorgeschlagen, daß der Kippofen in zumindest zwei Gießstellungen kippbar ist, wobei die gegebenenfalls vorhandene Einrichtung zum Zurückhalten der Schlacke vorzugsweise eine Abstreifleiste ist, die um eine zur jeweiligen Tragachse parallele Drehachse schwenkbar ist.

Die Erfindung wird nachfolgend anhand eines bevorzugten Ausführungsbeispiels mit Hilfe der Figuren beschrieben.

Es zeigen

Fig. 1 einen Querschnitt eines erfindungsgemäßen Kippofens im Aufriß, und

Fig. 2 einen Grundriß des Kippofens nach Fig. 1.

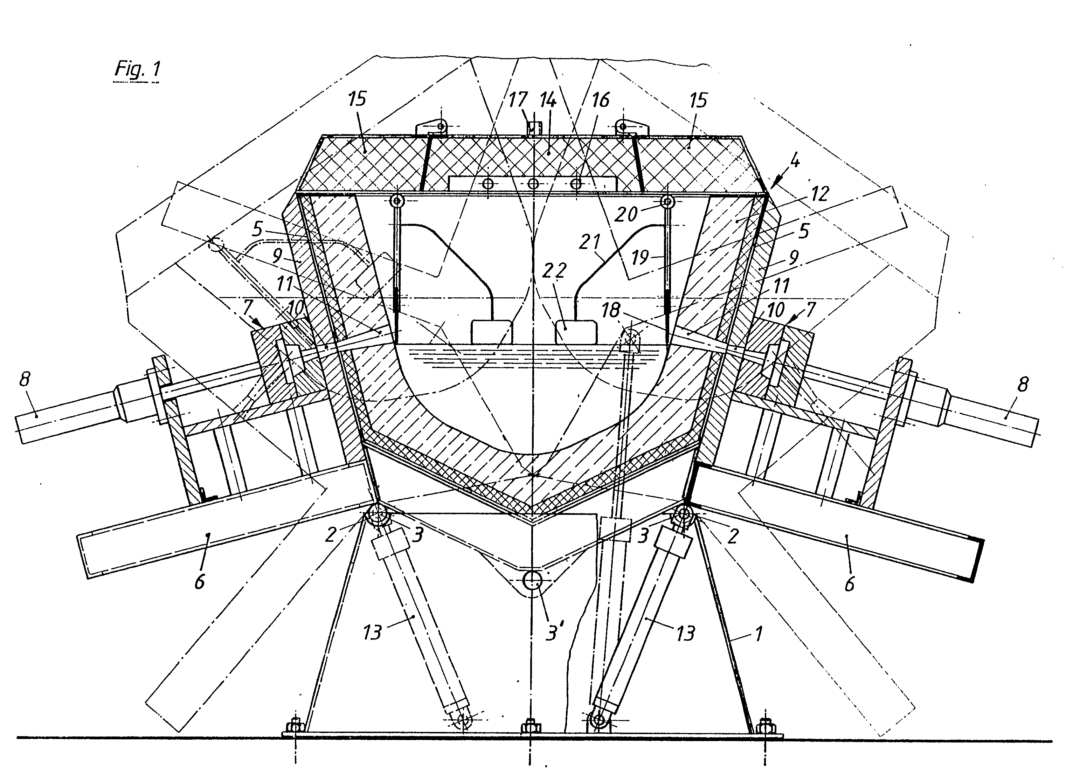

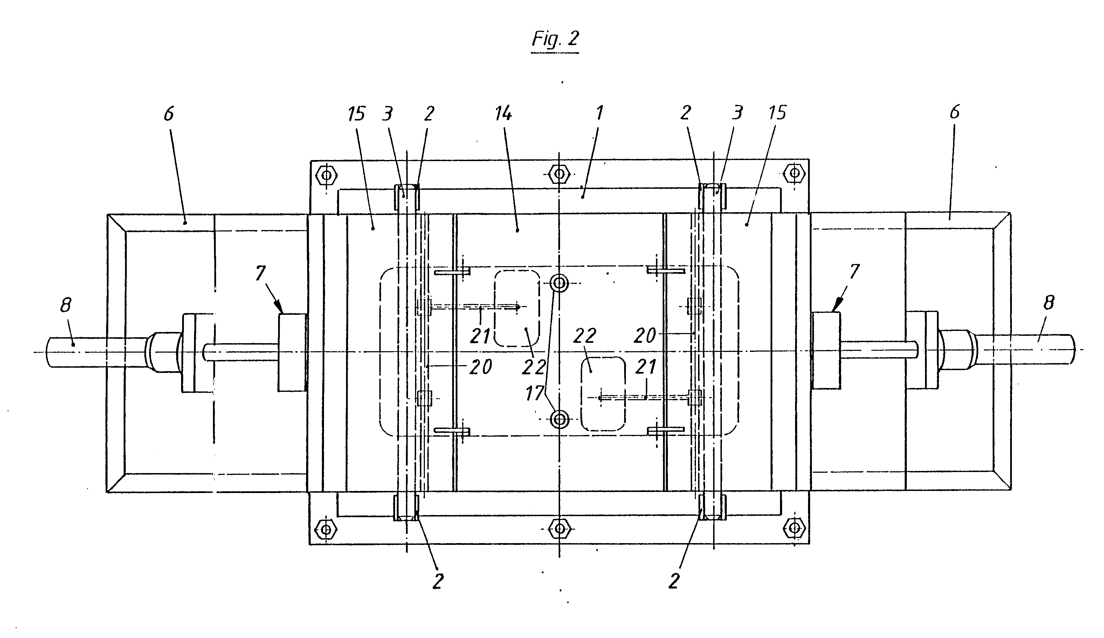

In Fig. 1 und 2 bezeichnet 1 einen Tragsockel, an dessen Oberseite vier halbzylindrische Lagerschalen 2 befestigt sind, um ein Traglager für zwei Tragachsen 3 zu bilden, die einander parallel gegenüberliegend an den seitlichen unteren Außenkanten des Gießgefäßes 4 befestigt sind. An den beiden parallel zu den Trag achsen 3 verlaufenden Seitenaußenwänden 5 des Gießgefäßes 4 ist jeweils ein Halterahmen 6 angeordnet, der die Kokille 7 sowie einen Hydraulikzylinder 8 für das Öffnen und Schließen, sowie für das Anpressen der Kokille an eine Gießdüsenplatte 9 trägt, die mit der Seitenaußenwand 5 verbunden ist. In der Gießdüsenplatte 9 befinden sich Düsen 10, die sich konisch zum Gießgefäß 4 hin bis zu einer länglichen, den Bereich der Düsen 10 umfassenden Öffnung 11 in der Auskleidung 12 des Gießgefäßes 4 verengen. Am Boden des Tragsockels sind zumindest zwei Hydraulikzylinder 13 - schwenkbar befestigt, die jeweils an den beiden Tragachsen 3 angreifen. Anstelle der Hydraulikzylinder können auch pneumatische oder elektromotorische Antriebe vorgesehen sein.

Das Gießgefäß 4 ist oben mit einem Deckel abgeschlossen, der aus einem starren Deckelteil 14 und zwei an diesem befestigten Klappen 15 besteht. Im starren Deckelteil befinden sich Heizstäbe 16, sowie zwei Anschlußstutzen 17 zum Einbringen von Gasen oder zum Evakuieren des Gießbehälters 4 (Fig.2).

In der dargestellten Grundstellung des Gießbehälters 4 reicht der Spiegel des Schmelzbades bis zur Unterkante der Öffnung 11. Genau an dieser Stelle endet auch eine drehbar aufgehängte Abstreifleiste 18, die vorzugsweise aus feuerfestem Material, z.B. Keramik, besteht und an einem Gestänge 19 befestigt ist. Das Gestänge 19 ist am oberen Rand des Gießbehälters 4 drehbar auf einer Welle 20 gelagert und weist einen nach unten gebogenen Arm 21 auf, an dessen Ende ein Schwimmer 22 angeordnet ist, der am Schmelzbad schwimmt.

Soll beispielsweise die in Fig. 1 rechts angeordnete Kokille 7 gegossen werden, so wird der linke Hydraulikzylinder 13 betätigt, so daß die linke Tragachse 3 aus den Lagerschalen 2 herausgehoben und das Gießgefäß 4 um die rechte Tragachse 3 in die mit strichlierten Linien dargestellte Gießstellung gekippt wird, wobei der Schwimmer 22 durch den gestiegenen Spiegel des Schmelzbades angehoben und die Abstreifleiste 18 nach oben von der Ausgießöffnung 11 weggeschwenkt wird, sodaß keine Schlacke in die Ausgießöffnung 11 gelangt.

In ähnlicher Weise erfolgt das Abgießen der in Fig. 1 links dargestellten Kokille 7, wobei der Gießbehälter 4 in die mit strichpunktierten Linien dargestellte Gießstellung durch Betätigen des rechten Hydraulikzylinders 13 gebracht wird.

Die Erfindung wurde anhand eines bevorzugten Ausführungsbeispiels beschrieben, bei welchem zwei Tragachsen 3 vorgesehen sind. Es besteht in diesem Fall auch die Möglichkeit, daß nur eine Tragachse 3' an der Unterseite des Gießgefäßes 4 drehbar gelagert ist, wie in Fig. 1 mit strichlierten Linien dargestellt. Es können auch drei oder mehrere Tragachsen vorgesehen sein, die in halbzylindrischen Lagern gelagert sind, sodaß drei oder mehr Gießstellungen erzielbar sind, wobei die Tragachsen um entsprechende Winkel zueinander versetzt angeordnet werden.

## Ansprüche

1. Kippofen zur Herstellung von Kokillengußteilen aus Glas, Metall, insbesondere Leichtmetall, gegebenenfalls mit Einrichtungen zum Zurückhalten der Schlacke vor der Ausgießöffnung der Ofenauskleidung des Gießgefäßes, wobei der Kippofen von einer Grundstellung um eine Tragachse in eine Gießstellung und in eine zweite Stellung kippbar ist, dadurch gekennzeichnet, daß der Kippofen in zumindest zwei Gießstellungen kippbar ist, wobei die gegebenenfalls vorhandene Einrichtung zum Zurückhalten der Schlacke vorzugsweise eine Abstreifleiste (18) ist, die um eine zur jeweiligen Tragachse (3,3') paralalle Drehachse schwenkbar ist.

2. Kippofen nach Anspruch 1, dadurch gekennzeichnet, daß zwei Tragachsen (3) einander paralell gegenüberliegend vorzugsweise an den seitlichen unteren Außenkanten des Gießgefäßes (4) befestigt sind, wobei jedes Ende der Tragachsen (3) jeweils in einer halbzylindrischen Lagerschale (2) auf einem Tragsockel (1) gelagert ist.

3. Kippofen nach Anspruch 2, dadurch gekennzeichnet, das an jeder Tragachse (3) zumindest ein Hydraulikzylinder (13) angreift.

4. Kippofen nach Anspruch 1, dadurch gekennzeichnet, daß die Abstreifleiste (18) jeweils an einem Gestänge (19) befestigt ist, welches auf einer Welle (20) am oberen Rand des Gießbehälters (4) drehbar gelagert ist, wobei das Gestänge (19) einen nach unten gebogenen Arm (21) aufweist, an dessen Ende ein Schwimmer (22) angeordnet ist, der am Schmelzbad schwimmt, sodaß die Abstreifleiste (18) beim Kippen des Gießgefäßes (4) in die Gießstellung von der Ausgießöffnung (11) wegschwenkt.

5. Kippofen nach Anspruch 4, dadurch gekennzeichnet, daß die Abstreifleiste (18) in der Grundstellung des Gießbehälters (4) and der Unterkante der Ausgießöffnung (11) endet.

Fig. 1

0 199 711

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 863 704 (F. KAHN) <br> * Spalte 6, Zeilen 6-22; Figuren 7,8 * <br><br> --- | 1 | B 22 D 23/00 <br> B 22 D 15/04 <br> C 03 B 5/20 <br> C 03 B 5/14 <br> F 27 B 3/06 |
| Y | FR-A- 685 114 (F. STUHL) <br> * Seite 1, Zeilen 19-28; Seite 1, Zeile 57 - Seite 2, Zeile 9; Figur 1 * <br><br> --- | 1,2,3 | |
| Y | US-A-2 546 517 (T.E. NORMAN) <br><br> * Spalte 3, Zeile 27 - Spalte 4, Zeile 72; Figur 8 * <br><br> --- | 1,2,3,4 | |
| Y | US-A-2 554 836 (H.L. McFEATERS) <br> * Figuren 1,2; Spalte 2, Zeile 21 - Spalte 3, Zeile 54 * <br><br> --- | 1,4 | RECHERCHIERTE SACHGEBIETE (Int. Cl.4) |
| Y | BE-A- 496 003 (ALLMANNA SVENSKA ELEKTRISKA A.B.) <br> * Anspruch 1; Seite 2, Zeilen 13-25; Figuren 1,2 * <br><br> --- | 2,3 | B 22 D <br> C 03 B <br> F 27 D <br> F 27 B |
| A | SU-A- 959 910 (SHIYAN V G) <br><br> ----- | | |

Der vorliegende Recherchenbericht wurde für alle Patentansprüche erstellt.

| Recherchenort <br> DEN HAAG | Abschlußdatum der Recherche <br> 13-06-1986 | Prüfer <br> MAILLIARD A.M. |
|---|---|---|